Europäisches Patentamt

European Patent Office

Office européen des brevets

(11) Veröffentlichungsnummer: **0 472 920 A1**

# EUROPÄISCHE PATENTANMELDUNG

(21) Anmeldenummer: **91112572.2**

(22) Anmeldetag: **26.07.91**

(51) Int. Cl.⁵: **F16F 9/19**, F16F 9/44, F16F 9/38

(30) Priorität: **09.08.90 DE 4025255**

(43) Veröffentlichungstag der Anmeldung:
**04.03.92 Patentblatt 92/10**

(84) Benannte Vertragsstaaten:
**BE DE ES FR GB IT NL SE**

(71) Anmelder: **Hermann Hemscheidt Maschinenfabrik GmbH & Co.**
**Bornberg 97-103**
**W-5600 Wuppertal 1(DE)**

(72) Erfinder: **Hemscheidt, Alexander**
**Dorner Weg 100**
**W-5600 Wuppertal 21(DE)**

(74) Vertreter: **Patentanwälte Dr. Solf & Zapf**
**Schlossbleiche 20 Postfach 13 01 13**
**W-5600 Wuppertal 1(DE)**

(54) **Kolbenzylinderanordnung mit den Zylinder umschliessendem Ausgleichsraum.**

(57) Die Erfindung betrifft eine Kolbenzylinderanordnung (2), insbesondere zur Verwendung als Stoß- und Schwingungsdämpfer in Radfahrzeugen, bestehend aus einem Zylinder (4) und einem darin axialbeweglich geführten Kolben (6). Der Kolben (6) ist mit einer abgedichtet aus dem Zylinder (4) geführten Kolbenstange (10) verbunden und teilt innerhalb des Zylinders (4) zwei bei Kolbenbewegungen gegensinnig volumenveränderliche Zylinderräume (12, 14) ab. Die Zylinderräume (12, 14) sind miteinander sowie mindestens einer der Zylinderräume (12, 14) mit einem Ausgleichsraum (22) verbunden. Die Zylinderräume (12, 14) und der Ausgleichsraum (22) enthalten ein insbesondere hydraulisches Dämpfungsmedium und der Ausgleichsraum (22) ist als den Zylinder (4) konzentrisch umschließende Ringkammer ausgebildet. Der Ausgleichsraum (22) ist vollständig mit dem Dämpfungsmedium gefüllt und von mindestens einer elastischen Umfangswandung (28) begrenzt.

FIG.1

EP 0 472 920 A1

Die vorliegende Erfindung betrifft eine Kolbenzylinderanordnung, insbesondere zur Verwendung als Stoß- und Schwingungsdämpfer in Radfahrzeugen, bestehend aus einem Zylinder und einem darin axialbeweglich geführten Kolben, wobei der Kolben mit einer abgedichtet aus dem Zylinder geführten Kolbenstange verbunden ist und innerhalb des Zylinders zwei bei Kolbenbewegungen gegensinnig volumenveränderliche Zylinderräume abteilt, wobei die Zylinderräume miteinander sowie mindestens einer der Zylinderräume mit einem Ausgleichsraum verbunden sind, wobei die Zylinderräume und der Ausgleichsraum ein insbesondere hydraulisches Dämpfungsmedium enthalten, und wobei der Ausgleichsraum als den Zylinder konzentrisch umschließende Ringkammer ausgebildet ist.

Eine derartige Kolbenzylinderanordnung ist als sogenannter "Zweirohrdämpfer" beispielsweise aus Lueger, "Lexikon der Technik", Band 12, DVA Stuttgart 1967, Seiten 589 und 590, Bild 3, bekannt. Bei derartigen Zweirohrdämpfern besteht der Zylinder aus zwei zueinander konzentrischen Rohren, die über ein im Bereich des Zylinderbo-dens angeordnetes Bodenventil miteinander ver-bunden sind. Das innere Rohr bildet den eigentlichen Zylinder, in dem der Kolben geführt ist. Der zwischen den beiden Rohren gebildete, im Querschnitt ringförmige Ausgleichsraum dient zur Aufnahme des bei der Kolbenbewegung durch das Volumen der in den Zylinder verschobenen Kol-benstange verdrängten Volumens des Dämpfungs-mediums (Öl), wozu er bei dem bekannten Dämpfer nur zu einem Teil mit Öl und zum anderen Teil mit Luft gefüllt ist. Dabei muß der Luftraum des Ausgleichsraums so bemessen sein, daß er das dem Hubvolumen der Kolbenstange entsprechende Ölvolumen sowie das Differenzvolumen bei Wärmeausdehnung des Öles aufnehmen kann. Die Luft sorgt durch ihre pneumatische Federwirkung für eine Rückströmung des Öls aus dem Ausgleichsraum in den Zylinder. Bei dem bekannten Dämpfer ist insbesondere von Nachteil, daß keine Trennung von Luft und Öl vorgesehen ist, so daß einerseits die Einbaulage nicht beliebig gewählt werden kann (das Öl muß stets "unten" sein) und es andererseits auch - insbesondere bei schnellen Kolbenbewegungen - zu Vermischungen zwischen Öl und Luft, d.h. zu Schaumbildung, kommen kann. Außerdem ist der bekannte Dämpfer nachteiligerweise empfindlich gegen Temperaturänderungen, da sich der pneumatische Druck innerhalb des Gasvolumens mit der Temperatur verändert, so daß sich die Ansprechkräfte und gegebenenfalls die jeweilige Niveaulage ebenfalls mit der Temperatur ändern. In diesem Zusammenhang wird bemerkt, daß bereits allein durch die Drosselung (Dämpfung) des insbesondere hydraulischen Mediums - d.h. abgesehen von äußeren Temperatureinflüssen wie Son-neneinstrahlung und dergleichen - Temperaturerhö-hungen von 100 bis 150° C auftreten können, was sich in einem geschlossenen Gasvolumen stets durch einen entsprechend großen Druckanstieg bemerkbar macht.

Aus der oben genannten Literaturstelle sind zwar weiterhin auch sogenannte "Einrohrdämpfer" bekannt (Seite 590), bei denen der Ausgleichsraum über ein Trennelement von einem Gasvolumen getrennt ist, so daß es hier bei beliebiger Einbaulage nicht zu der nachteiligen Vermischung von Öl und Luft kommen kann. Allerdings tritt aufgrund des vorhandenen Gaspolsters ebenfalls der Nachteil einer großen Temperaturempfindlichkeit auf. Zudem ist hier nachteilig, daß der Ausgleichsraum oberhalb oder unterhalb der Zylinderräume angeordnet ist, was zu einer großen Einbaulänge führt, und ferner arbeiten diese bekannten Dämpfer zumeist mit einem pneumatischen Vorspanndruck, was zu einer für viele Anwendungen nachteilig hohen Ansprechkraft führt. So sollen Dämpfer insbesondere in Radfahrzeugen sehr leicht und schnell schon bei geringen Kräften ansprechen.

Der vorliegenden Erfindung liegt daher die Aufgabe zugrunde, die Kolbenzylinderanordnung der gattungsgemäßen Art so zu verbessern, daß bei einer einfachen, kompakten und in der Herstellung preiswerten Bauform praktisch eine Temperaturunempfindlichkeit sowie ein leichtes Ansprechen schon bei geringen Kräften erreicht werden.

Erfindungsgemäß wird dies dadurch erreicht, daß der Ausgleichsraum vollständig mit dem Dämpfungsmedium gefüllt und von mindestens einer elastischen Umfangswandung begrenzt ist.

Erfindungsgemäß enthält die Kolbenzylinderanordnung somit kein Gasvolumen, so daß alle dies-bezüglichen, oben geschilderten Nachteile vermie-den werden. So ist die erfindungsgemäße Kolben-zylinderanordnung vorteilhafterweise äußerst un-empfindlich gegen Temperaturänderungen, und die Ansprechkräfte sind gering sowie praktisch konstant, da dem verdrängten Dämpfungsmedium ausschließlich die Elastizität der den Ausgleichsraum begrenzenden Umfangswandung entgegenwirkt. Diese Elastizität der Umfangswandung bewirkt auch die Rückströmung des Dämpfungsmediums aus dem Ausgleichsraum in den Zylinder.

In einer besonders vorteilhaften Ausführungsform der Erfindung ist die elastische Umfangswandung an einem am freien Ende der Kolbenstange befestigten und sich axial bis in den Bereich des Zylinders erstreckenden Schutzrohr gehalten. Dies bedeutet, daß der Ausgleichsraum zwischen dem Schutzrohr und der elastischen Umfangswandung gebildet ist, wobei der Ausgleichsraum über einen durch die Kolbenstange verlaufenden Kanal mit zumindest einem der Zylinderräume verbunden ist.

Vorzugsweise umschließt dabei das Schutzrohr den Zylinder konzentrisch mit geringem Umfangsspiel und ist seinerseits von der elastischen Umfangswandung außen umschlossen. Alternativ hierzu ist es jedoch ebenfalls möglich, die elastische Umfangswandung innen am Schutzrohr, d.h. zwischen dem Schutzrohr und dem Zylinder, anzuordnen. Durch die erfindungsgemäße Ausgestaltung ist die Kolbenzylinderanordnung bei kompakter Bauform auch besonders preiswert und einfach herstellbar, wozu auch das weitere Merkmal beiträgt, daß die Umfangswandung als schlauchartige Hülse (gummielastischer Schlauch) ausgebildet und einendig am freien Ende des Schutzrohres sowie anderendig an einem am sich über das Schutzrohr hinaus erstreckenden Ende der Kolbenstange befestigten Flansch jeweils insbesondere mittels einer Schlauchschelle befestigt ist. Hierbei mündet der Kanal der Kolbenstange im axial zwischen dem Schutzrohr und dem Flansch liegenden Bereich über mindestens einen Querkanal in den Ausgleichsraum. Durch die Erfindung wird auch eine besonders effektive Kühlung des Dämpfungsmediums im Bereich des Ausgleichsraums erreicht, da erfindungsgemäß eine "Zwangskühlung" bewirkt wird, indem bei den Kolbenbewegungen sich auch das Volumen eines zwischen dem Zylinder und dem Schutzrohr gebildeten Raumes ändert, so daß durch einen Umfangsspalt zwischen dem Zylinder und dem Schutzrohr ständig Umgebungsluft hin- und herströmt, was eine außerordentlich gute Wärmeabführung zur Folge hat.

Aufgrund der speziellen, erfindungsgemäßen Führung des Dämpfungsmediums durch den Kanal der Kolbenstange ergibt sich die Möglichkeit, innerhalb des Zylinders, und zwar im Bereich eines der Kolbenstange gegenüberliegenden, den Zylinder verschließenden Zylinderbodens, ein Dämpfungsventil mit einer insbesondere kolbenwegabhängigen Dämpfungscharakteristik anzuordnen. Dieses Dämpfungsventil besteht einerseits aus einem innerhalb des der Kolbenstange gegenüberliegenden, ersten Zylinderraumes angeordneten, sich ausgehend von dem Zylinderboden axial in Richtung des Kolbens erstreckenden Steuerstift sowie andererseits aus einer mit dem Ausgleichsraum sowie auch mit dem zweiten, als Ringraum die Kolbenstange umschließenden Zylinderraum verbundenen, axialen Drosselöffnung des Kolbens. Dabei besitzt der bei den Kolbenbewegungen in die Drosselöffnung des Kolbens eintauchende Steuerstift einen sich über seine Länge verändernden Querschnitt, so daß zwischen dem Steuerstift und der Drosselöffnung ein Drosselkanal mit einem sich in Abhängigkeit von der Kolbenstellung verändernden Strömungsquerschnitt gebildet ist. Insbesondere besitzt der Steuerstift einen sich ausgehend von dem Zylinderboden in Richtung des Kolbens verjüngenden Querschnitt, so daß erfindungsgemäß die Dämpfung in der ausgezogenen Lage des Kolbens klein ist und beim Einschieben des Kolbens in den Zylinder größer wird. Dies trägt in vorteilhafter Weise zu der angestrebten, geringen Ansprechkraft bei, da erfindungsgemäß das Dämpfungsventil bei Beginn eines Stoßes, d.h. bei Beginn des Einschiebens des Kolbens in den Zylinder, einen großen Strömungsquerschnitt aufweist, der dann beim Einschieben des Kolbens zur Stoßdämpfung kleiner wird. Zur Einstellung einer bestimmten, gewünschten Dämpfungscharakteristik bzw. Kennlinie kann der Steuerstift beliebige Konturen besitzen. Hierzu ist es besonders vorteilhaft, wenn der Steuerstift in dem Zylinderboden insbesondere über ein Schraubgewinde lösbar, d.h. auswechselbar, gehaltert ist, da hierdurch auch die Möglichkeit besteht, die Dämpfungseigenschaften nachträglich zu verändern und an bestimmte Erfordernisse anzupassen.

Weitere vorteilhafte Ausgestaltungsmerkmale der Erfindung sind in den Unteransprüchen und der folgenden Beschreibung enthalten.

Anhand eines in der Zeichnung dargestellten Ausführungsbeispiels soll die Erfindung im folgenden näher erläutert werden. Dabei zeigen:

Fig. 1    einen schematischen, vereinfachten Längsschnitt einer erfindungsgemäßen Kolbenzylinderanordnung und

Fig. 2    eine beispielhafte Dämpfungskennlinie der erfindungsgemäßen Kolbenzylinderanordnung.

Eine erfindungsgemäße Kolbenzylinderanordnung 2 besteht aus einem einseitig offenen Zylinder 4 und einem in diesem axialbeweglich geführten Kolben 6. Der Kolben 6 ist mit einer abgedichtet aus dem offenen Ende des Zylinders 4 geführten Kolbenstange 10 verbunden und teilt innerhalb des Zylinders 4 zwei bei Kolbenbewegungen gegensinnig volumenveränderliche Zylinderräume voneinander ab, und zwar einen auf der der Kolbenstange 10 abgekehrten Seite des Kolbens 6 angeordneten, ersten Zylinderraum 12 sowie einen die Kolbenstange 10 mit ringförmigem Querschnitt umschließenden, zweiten Zylinderraum 14. An ihrem freien, aus dem Zylinder 4 nach außen ragenden Ende weist die Kolbenstange 10 ein nur angedeutetes Befestigungselement 16 auf, und der Zylinder 4 ist an seinem dem offenen Ende gegenüberliegenden Ende über einen Zylinderboden 18 geschlossen, der ebenfalls ein Befestigungselement 20 besitzt.

In einer bevorzugten Anwendung der erfindungsgemäßen Kolbenzylinderanordnung 2 wird diese als Stoß- und Schwingungsdämpfer z.B. in einem Kraftfahrzeug verwendet, wobei insbesondere die Kolbenstange 10 mit ihrem Befestigungselement 16 an einem nicht dargestellten Fahrzeugrahmen (gefederte Masse) und der Zylinder 4 mit seinem Befestigungselement 20 beispielsweise an einem ebenfalls nicht dargestellten Fahrzeugrad (ungefederte Masse) befestigt werden.

Die erfindungsgemäße Kolbenzylinderanordnung 2 besitzt nun weiterhin einen Ausgleichsraum 22, der den Zylinder 4 außen konzentrisch umschließt. Die Zylinderräume 12 und 14 sowie auch der Ausgleichsraum 22 enthalten ein insbesondere hydraulisches Dämpfungsmedium, wobei der Ausgleichsraum 22 zur Aufnahme des dem Hubvolumen der Kolbenstange entsprechenden Volumens des Dämpfungsmediums dient. Die beiden Zylinderräume 12 und 14 sind miteinander über Kanäle des Kolbens 6 sowie vorzugsweise über zwei gegensinnige Rückschlagventile 24 und 26 verbunden. Ferner ist der erste Zylinderraum 12 auch mit dem Ausgleichsraum 22 verbunden.

Erfindungsgemäß ist nun der Ausgleichsraum 22 vollständig, d.h. ohne ein verbleibendes Luftbzw. Gasvolumen, mit dem Dämpfungsmedium gefüllt und dabei von mindestens einer elastischen Umfangswandung 28 begrenzt. In der dargestellten, besonders vorteilhaften Ausführungsform der Erfindung besitzt die Kolbenzylinderanordnung 2 ein Schutzrohr 30, welches einendig am freien Ende der Kolbenstange 10 befestigt ist und sich anderendig koaxial zu dem Zylinder 4 bis über den Übergangsbereich zwischen dem Zylinder 4 und der Kolbenstange 10 erstreckt. Die elastische Umfangswandung 28 ist an diesem Schutzrohr 30 gehaltert, so daß der Ausgleichsraum 22 zwischen dem Schutzrohr 30 und der elastischen Umfangswandung 28 gebildet ist. Der Ausgleichsraum 22 ist hierbei erfindungsgemäß über einen durch die Kolbenstange 10 verlaufenden Kanal 32 mit dem ersten Zylinderraum 12 verbunden.

Vorzugsweise umschließt das Schutzrohr 30 den Zylinder 4 konzentrisch mit geringem Umfangsspiel, so daß ein schmaler Ringspalt 34 zwischen dem Zylinder 4 und dem Schutzrohr 30 gebildet ist. Die elastische Umfangswandung 28 ist hierbei als schlauchartige Hülse 36, d.h. als gummielastischer Schlauch, ausgebildet und umschließt das Schutzrohr 30 außen. Einendig ist die schlauchartige Hülse 36 am freien, dem Zylinder 4 zugekehrten Ende des Schutzrohrs 30 sowie anderendig an einem am sich über das Schutzrohr 30 hinaus erstreckenden Ende der Kolbenstange 10 befestigten Flansch 38 befestigt, und zwar insbesondere mittels jeweils einer Schlauchschelle 40. Der durch die Kolbenstange 10 verlaufende Kanal 32 mündet hierbei im axial zwischen dem Schutzrohr 30 und dem Flansch 38 liegenden Bereich über mindestens einen Querkanal 42 in den Ausgleichsraum 22.

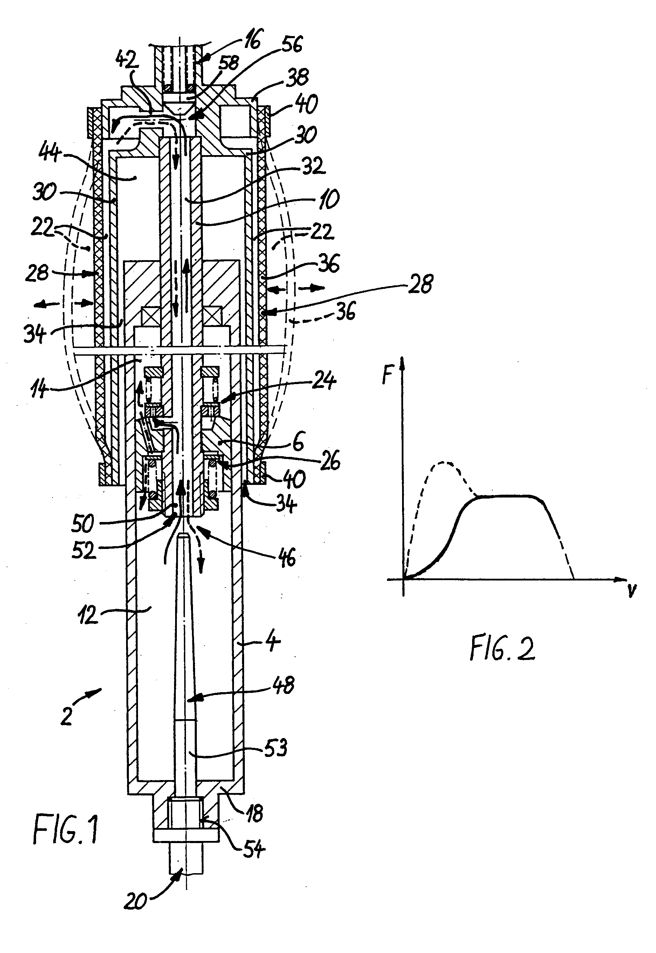

In Fig. 1 ist angedeutet, daß beim Einschieben des Kolbens 6 in den Zylinder 4 ein Teilvolumen des Dämpfungsmediums aus dem ersten Zylinderraum 12 in Richtung der voll eingezeichneten Pfeile über das insbesondere federbelastete Rückschlagventil 24 in den zweiten Zylinderraum 14 strömt, und ein zweites Teilvolumen strömt ebenfalls in Richtung der voll eingezeichneten Pfeile durch den Kanal 32 der Kolbenstange 10 und die Querkanäle 42 in den Ausgleichsraum 22, wodurch sich die Umfangswandung 28 bzw. die Hülse 36 elastisch verformt, d.h. nach außen aufweitet (in Fig. 1 gestrichelt eingezeichnet). Beim "Ausfedern" bewirkt die Elastizität der Umfangswandung 28 eine Rückströmung des Dämpfungsmediums aus dem Ausgleichsraum 22 in Richtung der gestrichelt eingezeichneten Pfeile durch den Kolbenstangenkanal 32 zurück in den ersten Zylinderraum 12. Ferner strömt auch ein entsprechendes Volumen aus dem zweiten Zylinderraum 14 über das zweite, ebenfalls federbelastete Rückschlagventil 26 zurück in den ersten Zylinderraum 12. Die Rückschlagventile 24 und 26 dienen hierbei in an sich bekannter Weise zum "Umschalten" der Dämpfung, d.h. zur Einstellung einer Druck- bzw. Zugstufe. Die Rückschlagventile sind vorzugsweise als Plattenventile ausgebildet.

Die erfindungsgemäße Ausgestaltung und Anordnung des Ausgleichsraums 22 bewirkt eine besonders effektive Kühlung des Dämpfungsmediums. Ein zwischen dem Zylinder 4 und dem Schutzrohr 30 gebildeter Raum 44 ist nämlich bei den Kolbenbewegungen ebenfalls volumenveränderlich, so daß stets Umgebungsluft durch den Ringspalt 34 in den Raum 44 hinein bzw. aus dem Raum 44 heraus strömt und dabei in einer äußerst effektiven Weise Wärme abführt.

In einer besonders vorteilhaften Weiterbildung der Erfindung besitzt die Kolbenzylinderanordnung 2 ein internes Dämpfungsventil 46 insbesondere mit einer kolbenwegabhängigen Dämpfungscharakteristik. Vorzugsweise ist die Dämpfung in der ausgezogenen Endlage des Kolbens klein und wird beim Einschieben des Kolbens 6 in den Zylinder 4 größer. Diese Dämpfungscharakteristik unterstützt die Lösung der der Erfindung zugrundeliegenden Aufgabe, da hierdurch bei Beginn des Einschiebens des Kolbens 6 aufgrund der dann nur geringen Dämpfung auch eine sehr geringe Ansprechkraft gegeben ist.

Das erfindungsgemäße Dämpfungsventil 46 besteht einerseits aus einem innerhalb des ersten Zylinderraums 12 angeordneten, sich ausgehend von dem Zylinderboden 18 axial in Richtung des Kolbens 6 erstreckenden Steuerstift 48 sowie andererseits aus einer axialen Drosselöffnung 50 des Kolbens 6, wobei die Drosselöffnung 50 mit dem Ausgleichsraum 22 über den Kolbenstangenkanal 32 und auch über einen Kolben-Querkanal und das erste Rückschlagventil 24 mit dem zweiten Zylinderraum verbunden ist. Demnach wird über das Dämpfungsventil 46 das gesamte, aus dem ersten Zylinderraum 12 verdrängte Volumen des Dämpfungsmediums gedrosselt bzw. gedämpft. Der bei den Kolbenbewegungen in die Drosselöffnung 50 eintauchende Steuerstift 48 besitzt einen sich über seine Länge verändernden Querschnitt, so daß zwischen dem Steuerstift 48 und der Drosselöffnung 50 ein Drosselkanal 52 mit einem sich in Abhängigkeit von der Kolbenstellung verändernden Strömungsquerschnitt gebildet ist. Um die angestrebten, geringen Ansprechkräfte insbesondere bei Beginn eines Stoßes, d.h. bei Beginn des Einschiebens des Kolbens 6 ausgehend von seiner ausgezogenen Endlage, zu erreichen, besitzt der Drosselkanal 52 in der ausgezogenen Endlage des Kolbens 6 einen maximalen, von dem Querschnitt der Drosselöffnung 50 bestimmten Strömungsquerschnitt. Dies bedeutet, daß der Steuerstift 48 eine derartige Länge besitzt, daß er erst ab einer bestimmten, bereits teilweise eingeschobenen Stellung des Kolbens 6 in die Drosselöffnung 50 eintaucht. Ferner besitzt der Drosselkanal 52 vorteilhafterweise in der eingeschobenen Endlage des Kolbens 6 noch einen bestimmten Mindest-Strömungsquerschnitt, wodurch eine Rückströmung des Dämpfungsmediums ermöglicht wird.

Es ist zudem vorteilhaft, wenn der Steuerstift 48 in seinem dem Kolben 6 abgekehrten und dem Zylinderboden 18 zugekehrten Bereich 53 über eine bestimmte Länge hinweg einen derartigen, dem Querschnitt der Drosselöffnung 50 des Kolbens 6 nahezu entsprechenden Querschnitt besitzt. Hierdurch wird gegen Ende des Einschubweges des Kolbens 6 eine starke Drosselung und damit eine zusätzliche Endlagendämpfung (hydraulische Abbremsung des Kolbens 6) erreicht, so daß sich außenliegende, mechanische Pufferelemente (sog. PU-Puffer) erübrigen können.

Es ist zudem besonders vorteilhaft, wenn der Steuerstift 48 - wie dargestellt - über ein abgedichtetes Schraubgewinde 54 lösbar in dem Zylinderboden 18 befestigt ist, da hierdurch der Steuerstift 48 sehr leicht von außen, d.h. ohne Demontage der übrigen Teile der Kolbenzylinderanordnung 2, gegen einen Steuerstift mit veränderter Kontur ausgewechselt werden kann, um die Dämpfungscharakteristik an bestimmte Erfordernisse anzupassen bzw. zu verändern. Wie dargestellt, kann der Steuerstift 48 mit seinem Schraubgewindeabschnitt sowie auch mit dem Befestigungselement 20 einstückig ausgebildet sein.

In Fig. 2 ist für eine bevorzugte Ausführungsform der Kolbenzylinderanordnung 2 bzw. für eine bevorzugte Ausführung des Dämpfungsventils 46 die entsprechende Dämpfungs-Kennlinie Dämpfungskraft F in Abhängigkeit von der Kolbengeschwindigkeit v dargestellt. Hieraus ist erkennbar, daß am Beginn des Kolbenweges die Dämpfungskraft sehr klein ist und dann langsam größer wird. Je nach Kontur des Steuerstiftes 48 kann dann die Dämpfung beispielsweise über einen bestimmten Kolbenweg nahezu konstant bleiben und dann gegebenenfalls wieder abfallen. In dem Diagramm in Fig. 2 ist als Gegensatz gestrichelt eine Dämpfungskennlinie eines Platten-Dämpfungsventils eingezeichnet. Ein derartiges Ventil hat bei Beginn der Kolbenverschiebung eine sehr große, steil ansteigende Dämpfung, was den Nachteil einer hohen Ansprechkraft mit sich bringt. Demgegenüber besitzt das erfindungsgemäße Dämpfungsventil 46 eine sehr geringe Ansprechkraft, was zu einem guten Komfort bei der bevorzugten Anwendung als Dämpfer in Radfahrzeugen beiträgt.

In einer nicht vorteilhaften Ausführungsform besitzt die Kolbenzylinderanordnung 2 im Bereich des freien Endes der Kolbenstange 10 in der Verbindung zwischen dem ersten Zylinderraum 12 und dem Ausgleichsraum 22 ein weiteres Ventil 56. Dieses Ventil 56 kann als zusätzliches Dämpfungsventil und dabei vorteilhafterweise hinsichtlich seiner Dämpfungskraft von außen insbesondere stetig und z.B. lastabhängig einstellbar ausgeführt sein. In der dargestellten Ausführungsform ist das Ventil 56 allerdings als von außen ansteuerbares Blockierventil mit einem einen Ventilkegel aufweisenden, federbelasteten Ventilstößel 58 ausgebildet (Sitzventil), mit dem durch Sperrung der Verbindung zwischen dem ersten Zylinderraum 12 und dem Ausgleichsraum 22 die Kolbenzylinderanordnung 2 hydraulisch blockiert werden kann.

Die Erfindung ist nicht auf das dargestellte und beschriebene Ausführungsbeispiel beschränkt, sondern umfaßt auch alle im Sinne der Erfindung gleichwirkenden Ausführungen.

**Patentansprüche**

1. Kolbenzylinderanordnung (2), insbesondere zur Verwendung als Stoß- und Schwingungsdämpfer in Radfahrzeugen, bestehend aus einem Zylinder (4) und einem darin axialbeweglich geführten Kolben (6), wobei der Kolben (6) mit einer abgedichtet aus dem Zylinder (4) geführten Kolbenstange (10) verbunden ist und innerhalb des Zylinders (4) zwei bei Kolbenbewegungen gegensinnig volumenveränderliche Zylinderräume (12, 14) abteilt, wobei die Zylinderräume (12, 14) miteinander sowie mindestens einer der Zylinderräume (12, 14) mit einem Ausgleichsraum (22) verbunden sind, wobei die Zylinderräume (12, 14) und der Ausgleichsraum (22) ein insbesondere hydraulisches Dämpfungsmedium enthalten, und wobei der Ausgleichsraum (22) als den Zylinder (4) konzentrisch umschließende Ringkammer ausgebildet ist, **dadurch gekennzeichnet,** daß der Ausgleichsraum (22) vollständig mit dem Dämpfungsmedium gefüllt und von mindestens einer elastischen Umfangswandung (28) begrenzt ist.

2. Kolbenzylinderanordnung nach Anspruch 1, **dadurch gekennzeichnet,** daß die elastische Umfangswandung (28) an einem am freien Ende der Kolbenstange (10) befestigten und sich axial bis in den Bereich des Zylinders (4) erstreckenden Schutzrohr (30) gehaltert ist, so daß der Ausgleichsraum (22) zwischen dem Schutzrohr (30) und der elastischen Umfangswandung (28) gebildet ist, wobei der Ausgleichsraum (22) über einen durch die Kolbenstange (10) verlaufenden Kanal (32) zumindest mit einem der Zylinderräume (12, 14) verbunden ist.

3. Kolbenzylinderanordnung nach Anspruch 2, **dadurch gekennzeichnet,** daß das Schutzrohr (30) den Zylinder (4) konzentrisch mit geringem Umfangsspiel umschließt und seinerseits von der Umfangswandung (28) außen umschlossen ist.

4. Kolbenzylinderanordnung nach Anspruch 2 oder 3, **dadurch gekennzeichnet,** daß die Umfangswandung (28) als schlauchartige Hülse (36) ausgebildet und einendig am dem Zylinder (4) zugekehrten Ende des Schutzrohres (30) sowie anderendig an einem am sich über das Schutzrohr (30) hinaus erstreckenden Ende der Kolbenstange (10) befestigten Flansch (38) jeweils insbesondere mittels einer Schlauchschelle (40) befestigt ist, wobei der Kanal (32) der Kolbenstange (10) im axial zwischen dem Schutzrohr (30) und dem Flansch (38) liegenden Bereich über mindestens einen Querkanal (42) in den Ausgleichsraum (22) mündet.

5. Kolbenzylinderanordnung nach einem oder mehreren der Ansprüche 1 bis 4, **gekennzeichnet durch** ein internes Dämpfungsventil (46) mit einer kolbenwegabhängigen Dämpfung, wobei insbesondere die Dämpfung in der ausgezogenen Lage des Kolbens (6) klein ist und beim Einschieben des Kolbens (6) in den Zylinder (4) größer wird.

6. Kolbenzylinderanordnung nach Anspruch 5, **dadurch gekennzeichnet,** daß das Dämpfungsventil (46) einerseits aus einem innerhalb des der Kolbenstange (10) gegenüberliegenden, ersten Zylinderraumes (12) angeordneten, sich ausgehend von einem Zylinderboden (18) axial in Richtung des Kolbens (6) erstreckenden Steuerstift (48) sowie andererseits aus einer mit dem Ausgleichsraum (22) und dem zweiten, als Ringraum die Kolbenstange (10) umschließenden Zylinderraum (14) verbundenen, axialen Drosselöffnung (50) des Kolbens (6) besteht, wobei der bei den Kolbenbewegungen in die Drosselöffnung (50) eintauchende Steuerstift (48) einen sich über seine Länge verändernden Querschnitt besitzt, so daß zwischen dem Steuerstift (48) und der Drosselöffnung (50) ein Drosselkanal (52) mit einem sich in Abhängigkeit von der Kolbenstellung verändernden Strömungsquerschnitt gebildet ist.

7. Kolbenzylinderanordnung nach Anspruch 6, **dadurch gekennzeichnet,** daß der Drosselkanal (52) in der ausgezogenen Endlage des Kolbens (6) einen maximalen Strömungsquerschnitt sowie in der eingeschobenen Endlage des Kolbens (6) noch einen bestimmten, eine Rückströmung des Dämpfungsmediums ermöglichenden Mindest-Strömungsquerschnitt besitzt.

8. Kolbenzylinderanordnung nach Anspruch 6 oder 7, **dadurch gekennzeichnet,** daß der Steuerstift (48) insbesondere über ein abgedichtetes Schraubgewinde (54) lösbar in dem Zylinderboden (18) befestigt ist.

9. Kolbenzylinderanordnung nach einem oder mehreren der Ansprüche 1 bis 8, **dadurch gekennzeichnet,** daß die beiden Zylinderräume (12, 14) über Kolbenkanäle sowie über zwei gegensinnig wirkende Rückschlagventile (24, 26) miteinander verbunden sind.

10. Kolbenzylinderanordnung nach einem oder mehreren der Ansprüche 1 bis 9, **gekennzeichnet durch** ein insbesondere im freien Endbereich der Kolbenstange (10) in der Verbindung zwischen dem ersten Zylinderraum (12) und dem Ausgleichsraum (22) angeordnetes, als Dämpfungsventil mit von außen einstellbarer Dämpfung oder als von außen betätigbares Blockierventil ausgebildetes Ventil (56).

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-932 949 (DILLENBURGER A.) | 1,9 | F 16 F 9/19 |
| | – – – | | F 16 F 9/44 |
| Y | DE-C-932 949 (* das ganze Dokument *) | 2 | F 16 F 9/38 |
| A | | 3,4 | |
| | – – – | | |
| X | FR-A-1 060 812 (ALLINQUANT L.) | 1 | |
| | – – – | | |
| Y | FR-A-1 060 812 (* Seite 1, rechte Spalte, Absatz 7 - Seite 2, rechte Spalte, Absatz 2; Abbildungen 3-5 *) | 2 | |
| A | | 4 | |
| | – – – | | |
| Y | US-A-2 458 157 (GENERAL MOTORS CORP.) | 1,9 | |
| | – – – | | |
| A | US-A-2 458 157 (* Spalte 1, Zeile 27 - Spalte 5, Zeile 41; Abbildungen *) | 2,4,10 | |
| | – – – | | |
| Y | DE-A-3 037 179 (FICHTEL & SACHS) * Abbildungen 2-6 * * | 1,9 | |
| | – – – | | |
| Y | DE-B-1 209 890 (SCHMID L.F.) | 1,2,9 | RECHERCHIERTE SACHGEBIETE (Int. Cl.5) |
| | – – – | | |
| A | DE-B-1 209 890 (* Ansprüche; Abbildung 1 *) | 10 | F 16 F |
| | – – – | | |
| Y,D | LUEGER, "LEXICON DER TECHNIK" 1967, STUTTGARD Seiten 589 - 590; 'schwingungsdämpfer' * Abbildung 4F * * | 1,2,9 | |
| | – – – | | |
| A | US-A-3 224 599 (PULLMAN INCO.) * Abbildungen 1-7 * * | 1,5-9 | |
| | – – – | | |
| A | US-A-2 538 375 (MONTGOMERY F.A.) * Spalte 1, Zeile 1 - Zeile 12; Abbildungen * * | 1,9,10 | |
| | – – – | | |
| | –/– | | |

Der vorliegende Recherchenbericht wurde für alle Patentansprüche erstellt

| Recherchenort | Abschlußdatum der Recherche | Prüfer |
|---|---|---|
| Den Haag | 25 November 91 | TSITSILONIS L. |

**Europäisches
Patentamt**

# EUROPÄISCHER
RECHERCHENBERICHT

Nummer der Anmeldung

## EP 91 11 2572

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. CI.5) |
|---|---|---|---|
| A | FR-A-1 316 865  (RHEINMETALL)<br>* Seite 2, linke Spalte, Absatz 1 - rechte Spalte, Absatz 1; Abbildungen * *<br><br>– – – – – | 1,9,10 | |
| | | | **RECHERCHIERTE SACHGEBIETE (Int. CI.5)** |

Der vorliegende Recherchenbericht wurde für alle Patentansprüche erstellt

| Recherchenort | Abschlußdatum der Recherche | Prüfer |
|---|---|---|
| Den Haag | 25 November 91 | TSITSILONIS L. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus anderen Gründen angeführtes Dokument
------------------------------------------
& : Mitglied der gleichen Patentfamilie,
übereinstimmendes Dokument